Europäisches Patentamt

European Patent Office

Office européen des brevets

(11) Publication number: **0 115 211**
**B1**

(12) **EUROPEAN PATENT SPECIFICATION**

(45) Date of publication of patent specification: **11.05.88**

(21) Application number: **83307994.0**

(22) Date of filing: **29.12.83**

(51) Int. Cl.⁴: **F 16 D 13/64**

(54) **Friction disc with segmented core plate and facings.**

(30) Priority: **31.01.83 US 462503**

(43) Date of publication of application:
**08.08.84 Bulletin 84/32**

(45) Publication of the grant of the patent:
**11.05.88 Bulletin 88/19**

(84) Designated Contracting States:
**DE FR GB IT SE**

(56) References cited:
**EP-A-0 030 791**
**US-A-3 754 627**

(73) Proprietor: **BORG-WARNER CORPORATION**
**200 South Michigan Avenue**
**Chicago Illinois 60604 (US)**

(72) Inventor: **Mannino, Anthony Jr.**
**1 So. 492 Chase Street**
**Lombard Illinois 60148 (US)**

(74) Representative: **Williams, Trevor John et al**
**J.A. KEMP & CO. 14 South Square Gray's Inn**
**London WC1R 5EU (GB)**

Courier Press, Leamington Spa, England.

## Description

The present invention relates to annular friction rings or discs which are conventionally utilized in wet clutch packs of interleaved clutch plates that are alternately connected to an inner hub and an outer drum of a clutch assembly and are engaged to rotate the parts together by a hydraulically or spring-actuated piston. A friction disc or plate normally consists of an annular steel ring or plate, which serves as a core plate, and a pair of annular friction facings that are riveted or otherwise secured to the core plate to complete the friction disc.

Blanking out the friction rings and annular core plate produces considerable offal which averages to approximately two-thirds of the total material used. This results in a considerable problem of recycling material, and certain friction materials cannot be recycled which is particularly wasteful and expensive.

To overcome the problem of offal in the blanking out of the annular friction facings, US-A-4,260,047 advanced the concept of an annular core plate and segmented friction facings having tab and slot interlocking ends. The friction facings consist of quarter circle segments which are blanked out of a rectangular sheet of friction material that is formed with a plurality of parallel grooves, with the tabs and slots formed in ungrooved portions. The segments are interconnected to form a ring and are bonded to the core plate. Although waste friction material is reduced, the grooving process and the waste of steel in blanking out the core plate remains. The present invention improves on the process of US-A-4,260,047.

The friction disc of the present invention, which is characterised as specified in claim 1, has both a segmented core plate and segmented friction facings wherein there is a considerable saving in material for both the steel core plate and friction material. The core plate has a plurality of arcuate segments with tab and slot end portions which interlock to form an annular core plate. The friction facings are also formed of arcuate segments which overlap the interlocking end portions of the core plate and are suitably bonded thereto on both faces. The facing segments do not need to be interconnected together, and the bonding of the friction segments to the interlocked core plate segments in an overlapping manner prevents disassembly of the core plate.

The method of forming a friction disc of the present invention as characterised in claim 11 has both the interlocking core plate segments and the friction facing segments perforated to permit the use of alignment pins for handling, orientation and alignment of the segments for assembly and bonding. Also, the alignment holes may allow oil to pass therethrough from one side of the assembled plate to the other when in use for pressure equalisation.

The present invention further comprehends the provision of a novel friction disc wherein the friction facings do not require grooves formed in the facing surfaces to allow the circulation of oil for cooling. As the facing segments need not be interlocked, when the facing segments are bonded to the core plate, a space is provided between adjacent ends of facing segments for an oil channel. Also, slots or openings can be formed in the core plate to intersect channels formed in the facing segments for increasing oil flow.

Further objects are to provide a construction of maximum simplicity, efficiency, economy and ease of assembly and operation, and such further objects, advantages and capabilities as will later more fully appear and are inherently possessed thereby.

Figure 1 is a perspective view of a friction disc according to the present invention.

Figure 2 is a rear elevational view of the friction disc assembly of Figure 1.

Figure 3 is a cross-sectional view taken on the line 3-3 of Figure 2.

Figure 4 is an enlarged partial rear elevational view of the friction disc with portions broken away.

Figure 5 is a cross-sectional view of a portion of the friction disc taken on the line 5-5 of Figure 4 showing the method of assembly.

Figure 6 is an enlarged partial rear elevational view of an alternate embodiment of friction disc.

Figure 7 is a further enlarged rear elevational view of a portion of the friction disc with parts broken away.

Figure 8 is a cross-sectional view taken on the line 8-8 of Figure 7.

Figure 9 is a cross-sectional view taken on the line 9-9 of Figure 7.

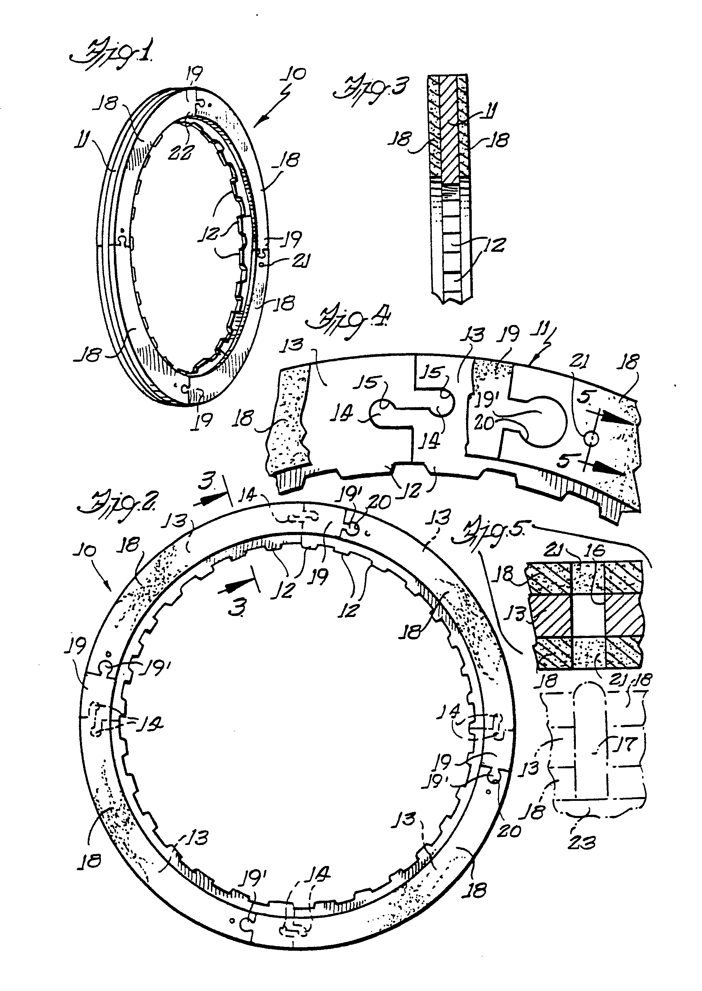

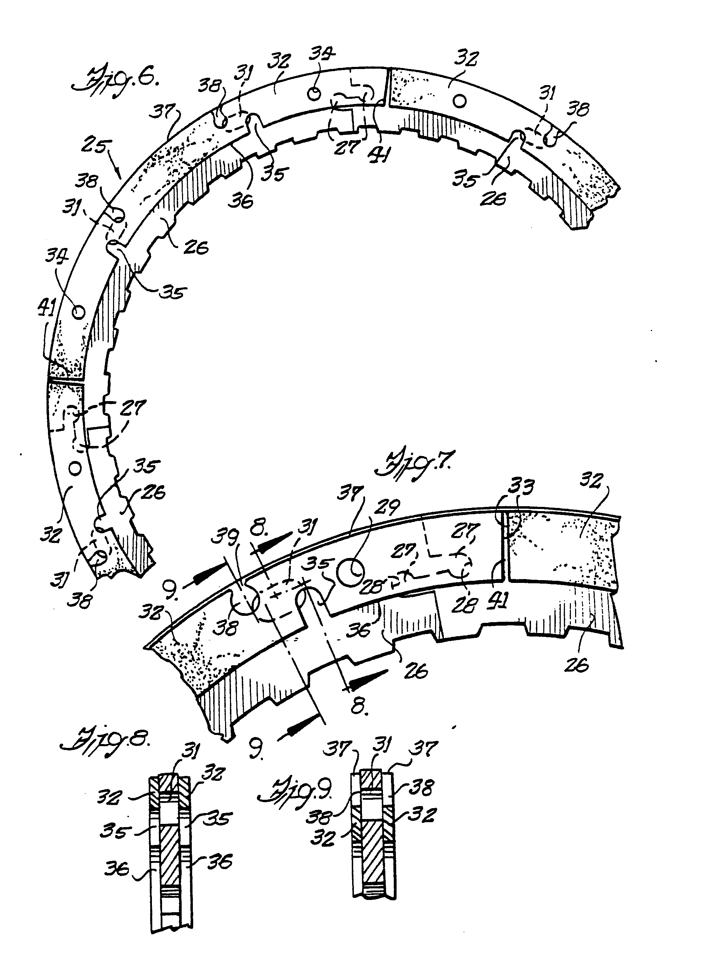

Referring more particularly to the disclosure in the drawings wherein are shown illustrative embodiments of the present invention, Figures 1 through 5 disclose a friction disc or plate 10 which may be utilized in a multiplate clutch pack for an automatic transmission or for any other suitable clutch plate application. The friction disc 10 includes a steel core plate 11 which may have teeth 12 on either the inner or outer periphery thereof. The core plate is formed of four arcuate metal segments 13, each segment having a tab 14 and adjacent slot 15 at each end with the tab 14 and slot 15 at either end being complementary to and conformably receiving a tab 14 and slot 15 of the next adjacent segment. Also, one or more openings 16 are provided in each segment 13 to receive alignment pins 17 (see Figure 5) for purposes of assembly. When the tabs 14 and slots 15 of the segments 13 are interlocked, an annular plate or ring 11 is formed.

Also, four arcuate friction facing segments 18 are provided to form a generally annular facing on each surface of the plate 11. Each segment 18 has a tab 19' on one end 19 and a slot on the opposite end and has openings 21 for the alignment pins 17; the slot 20 of one segment being complementary to and conformably receiving the tab 19' of the next adjacent segment. Each friction segment 18 is bonded to the core plate 11 with an end 19 overlapping the interlocking tabs 14 and slots 15 of each pair of adjoining core segments 13. The adjacent segments 18 are interlocked in the same manner as the core plate segments to provide annular friction rings.

To manufacture the friction discs 10, an assembly fixture 23 may be utilized with the alignment pins 17 positioned therein for reception of the segments. After unloading a completed disc, the fixture is inspected for cleanliness and then at successive stations has friction segments 18 for one surface, adhesively coated core segments 13 and then friction segments 18 for the opposite surface loaded onto the alignment pins. The loaded fixture has heat and pressure applied to bond the friction segments to the interlocked core segments. After pressing, the fixture and completed disc are cooled and the disc unloaded. Although disclosed as four core segments and four friction segments for each face, manufacturing efficiency and disc size may dictate other numbers of segments. For example, a disc may comprise four core segments with eight friction segments for each facing. Also, the alignment pins 17 may be eliminated if a fixture is utilized that will handle the interlocked annular rings.

Figures 6 through 9 disclose an alternate embodiment of the present invention wherein the friction disc includes four quarter circle core segments 26, each having adjacent tabs 27 and slots 28 at the opposite ends with each slot 28 being complementary to and receiving the tab 27 of the next adjacent segment. Openings 29 are formed in the segments 26 to receive the alignment pins utilized in assembly, and circumferentially elongated openings 31 are located in the segments for purposes of oil circulation.

The arcuate friction segments 32 have generally square ends 33, small openings 34 for the alignment pins, U-shaped slots opening into the inner periphery 36 and extending radially outward to the approximate mid-point of the facing segment. Opening into the outer periphery 37 of each segment are radially outwardly extending slots 38 having a narrowed neck 39 adjacent the segment edge. The slots 38 are slightly circumferentially offset from the slots 35.

As seen in Figures 7, 8 and 9, when the friction segments 32 are assembled and bonded onto the interlocked core segments 26 in overlapping relation, both of a pair of slots 35 and 38 partially overlap an elongated opening 31 in the core segment to provide interconnected oil channels. A pair of slots 35 and 38 in the friction segments 32 on opposite sides of the core ring may both partially overlap a single opening 31. Also, the narrowed neck 39 of each outer slot 38 provides a restricted opening to impede the outward flow of oil and assure that the slots are full of oil during rotation of the disc. The ends 33 of adjacent segments 32 are so formed that together an outwardly tapered oil channel 41 is formed therebetween, also to assure that the channels are full of oil during rotation. If there is sufficient overlap between the openings 31 and the slots 35 and 38, these generally aligned openings may be used to receive the alignment pins for assembly of the friction disc.

Furthermore, in the final product, the aligned openings 29 and 34 in the core segments 26 and friction segments 32, respectively, may allow for passage of oil from one side of the plate to the other for pressure equalization; this function also being true for the aligned openings 16 and 21 in the friction disc 10. In both embodiments, any necessary oil channels are achieved without a secondary operation to machine or press grooves into the face of each friction segment, although additional oil grooves may be cut or pressed into the facings if deemed necessary. Also, thinner facing material can be utilized in the present embodiments than if friction material with embossed oil grooves or riveted fasteners were used.

## Claims

1. A friction disc (10;25) comprising an annular core plate (11) and substantially annular friction facings secured to the opposite faces of the core plate, each of said friction facings comprising a plurality of arcuate friction segments (18;32) arranged end-to-end and bonded to said core plate, characterised in that the core plate is comprised of a plurality of arcuate core segments (13;26) arranged end-to-end to form the annular plate, each segment having at least a tab (14;27) at one end and a slot (15;28) at the other end conformably receiving the tab of the next adjacent segment to interlock the segments together; and in that each friction segment overlays the interlocked ends of a pair of adjoining core segments.

2. A friction disc as claimed in claim 1, characterised in that each core segment (13;26) has a tab (14;27) and adjacent slot (15;28) at each end operatively connected with the tab and slot of the next adjacent core segment.

3. A friction disc as claimed in claim 1 or 2, characterised in that said core segments (13) and friction segments 18) have aligned openings (16, 21) adapted to receive alignment pins (17) for assembly of the segments.

4. A friction disc as claimed in claim 1, 2 or 3, characterised in that each friction segment (18) has a tab (19') at one end (19) and a slot (20) at the opposite end complementarily receiving the tab (19') of the next adjacent friction segment.

5. A friction disc as claimed in claim 1, 2 or 3, characterised in that said friction segments (32) are bonded to the core segments (26) with sufficient spacing between the ends thereof to form an oil channel (41).

6. A friction disc as claimed in claim 5, characterised in that said oil channels (41) are outwardly tapered to ensure that the channels are filled with oil during rotation.

7. A friction disc as claimed in claim 1, 2, 3, 5, or 6, characterised in that each friction segment (32) has pairs of circumferentially offset slots (35, 38) opening alternately into the inner and outer peripheries (36, 37) of the segment to form oil channels.

8. A friction disc as claimed in claim 7, characterised in that each core segment (26) has an elongated opening (31) formed therein partially overlapping each pair of offset slots (35, 38) to allow communication therebetween.

9. A friction disc as claimed in claim 8, characterised in that said elongated opening (31) in a core segment (26) overlaps a pair of offset slots (35, 38) in friction segments (32) on the opposite surfaces of the core segment.

10. A friction disc as claimed in any one of claims 7 to 9, characterised in that the slots (38) in the friction segments (32) opening into the outer periphery have narrowed necks (39) to impede oil flow therethrough.

11. A method of forming a friction disc as claimed in any preceding claim, wherein a plurality of the arcuate segments (18) of friction facing material are formed and bonded to opposite faces of the annular core plate (11), the friction segments being arranged end to end to provide a substantially annular friction facing on each face of the core plate; characterised in that the core plate itself is comprised of a plurality of arcuate segments (13) with alignment holes (16, 21) being provided in each of the core plate segments and friction segments, a plurality of the friction segments are assembled on alignment pins (17) of a fixture (23) which penetrate the alignment holes of the segments to locate the friction segments end to end to form a substantially complete ring, a plurality of the core segments are assembled on the alignment pins in contact with the friction segments to form a complete ring with the adjacent ends of successive core segments interlocked together; a second plurality of friction segments is assembled on said pins in contact with the opposite face of the core segments; and said friction segments are bonded under heat and pressure to the core segments while all said segments are held relatively positioned by said pins.

### Patentansprüche

1. Reibscheibe (10, 25) mit einer ringförmigen Kernplatte (11) und im wesentlichen ringförmigen Reibbelegen, die an den gegenüberliegenden stirnflächen der Kernplatte befestigt sind, wobei jeder Reibbeleg mehrere bogenförmige Reibsegmente (18, 32) aufweist, die mit ihren Enden aneinanderliegend angeordnet und mit der Kernplatte verbunden sind, dadurch gekennzeichnet, daß die Kernplatte mehrere bogenförmige Kernsegmente (13, 26) aufweist, die mit ihren Enden aneinanderliegend angeordnet sind und so die ringförmige Platte bilden, wobei jedes Segment mindestens einen Zapfen (14, 27) an einem Ende und einen Schlitz (15, 28) an dem anderen Ende aufweist, welcher entsprechend den Zapfen des nächstliegenden Segments aufnimmt, um die Segmente miteinander zu verriegeln, und daß jedes Reibsegment die verriegelten Enden eines Paares von aneinandergrenzenden Kernsegmenten überlappt.

2. Reibscheibe nach Anspruch 1, dadurch gekennzeichnet, daß jedes Kernsegment (13, 26) mit einem Zapfen (14, 27) und angrenzendem Schlitz (15, 28) an jedem Ende versehen ist, die mit dem Zapfen und dem Schlitz des benachbarten Kernsegments verbunden ist.

3. Reibscheibe nach Anspruch 1 oder 2, dadurch gekennzeichnet, daß die Kernsegmente (13) und Reibsegmente (18) zueinander ausgerichtete Bohrungen (16, 21) aufweisen, die Stifte (17) zum Zusammenfügen der Segmente aufnehmen.

4. Reibscheibe nach Anspruch 1, 2 oder 3, dadurch gekennzeichnet, daß jedes Reibsegment (18) einen Zapfen (19') an einem Ende (19) und einen Schlitz (20) an dem gegenüberliegenden Ende aufweist, die ergänzend den Zapfen (19') des nächstfolgenden Reibsegments aufnehmen.

5. Reibscheibe nach Anspruch 1, 2 oder 3, dadurch gekennzeichnet, daß die Reibsegmente (32) mit den Kernsegmenten (26) mit ausreichendem Raum zwischen deren Enden verbunden sind und einen Ölkanal (41) bilden.

6. Reibscheibe nach Anspruch 5, dadurch gekennzeichnet, daß die Ölkanäle (41) sich nach außen verjüngen und sicherstellen, daß die Kanäle während der Drehung mit Öl gefüllt sind.

7. Reibscheibe nach Anspruch 1, 2, 3, 5 oder 6, dadurch gekennzeichnet, daß jedes Reibsegment (32) Paare von in Umfangsrichtung versetzten Schlitzen (35, 38) aufweist, die sich abwechselnd zum Innen und Außenumfang (36, 37) des Segments öffnen und Ölkanäle bilden.

8. Reibscheibe nach Anspruch 7, dadurch gekennzeichnet, daß jedes Kernelement (26) eine darin gebildete langgestreckte Öffnung (31) aufweist, die teilweise jedes Paar von versetzten Schlitzen (35, 38) überlappt und eine Verbindung dazwischen ermöglicht.

9. Reibscheibe nach Anspruch 8, dadurch gekennzeichnet, daß die langgestreckte Öffnung (31) in einem Kernsegment (26) ein Paar von versetzten Schlitzen (35, 38) in Reibsegmenten (32) an den gegenüberliegenden Flächen des Kernsegments überlappt.

10. Reibscheibe nach einem der Ansprüche 7 bis 9, dadurch gekennzeichnet, daß die sich nach außen öffnenden Schlitze (38) in den Reibsegmenten (32) verengte Hälse (39) aufweisen, die den hindurchfließenden Ölstrom bremsen.

11. Verfahren zum Herstellen einer Reibscheibe nach einem der vorangehenden Ansprüche, worin mehrere der bogenförmigen Segmente (18) eines Reibbelagwerkstoffes hergestellt und mit gegenüberliegenden Seiten der ringförmigen Kernplatte (11) verbunden werden, wobei die Reibsegmente mit den Enden aneinanderliegend angeordnet werden und so einen im wesentlichen ringförmigen Reibbelag auf jeder Seite der Kernplatte bilden, dadurch gekennzeichnet, daß die Kernplatte selbst aus mehreren bogenförmigen Segmenten (13) besteht mit Ausrichtbohrungen (16, 21), die in jedem der Kernplattensegmente und Reibsegmente vorgesehen sind, mehrere der Reibsegmente auf Stiften (17) einer Aufspannvorrichtung (23) zusammengefügt werden, die die Ausrichtbohrungen der Segmente durchdringen und die Reibsegmente mit den Enden aneinander festlegen und so einen im wesentlichen vollständigen Ring bilden, mehrere der Kernsegmente auf den Stiften in Kontakt mit den Reibsegmenten zusammengefügt werden, und so mit den nächstliegenden Enden aufeinanderfolgender miteinander verriegelter Kernsegmente einen vollständigen Ring bilden, eine zweite Anzahl von Reibsegmenten auf den Stiften in Kontakt mit der gegenüberliegenden Seite des Kernsegments zusammengefügt wird und die Reibsegmente unter Wärme und Druck mit den Kernsegmenten verbunden werden, während alle die Segmente in ihrer relativen Lage zueinander durch die Stifte gehalten werden.

**Revendications**

1. Disque de friction (10; 25) comportant une plaque centrale annulaire (11) et des garnitures sensiblement annulaires de friction fixées aux faces opposées de la plaque centrale, chacune des garnitures de friction comportant une multitude de segments de friction en forme d'arc (18; 32) disposés bout à bout et liés à la plaque centrale, caractérisé en ce que la plaque centrale est constituée d'une multitude de segments centraux en forme d'arc (13; 26) agencés bout à bout afin de former la plaque annulaire, chaque segment ayant au moins une patte (14; 27) à une extrémité et une fente (15; 28) à l'autre extrémité recevant de façon adaptable la patte du segment adjacent suivant pour verrouiller les segments ensemble; et en ce que chaque segment de friction recouvre les extrémités verrouillées d'une paire de segments centraux adjacents.

2. Disque de friction selon la revendication 1, caractérisé en ce que chaque segment central (13; 26) comporte une patte (14; 27) et une fente adjacente (15; 28) à chaque extrémité qui sont connectées de façon fonctionnelle à la patte et à la fente du segment central adjacent suivant.

3. Disque de friction selon la revendication 1, ou la revendication 2, caractérisé en ce que les segments centraux (13) et les segments de friction (18) comportent des ouvertures alignées (16, 21) destinées à recevoir des axes d'alignement (17) pour l'assemblage des segments.

4. Disque de friction selon la revendication 1, 2 ou 3, caractérisé en ce que chaque segment de friction (18) comporte une patte (19') à une extrémité (19) et une fente (20) à l'extrémité opposée recevant de façon complémentaire la patte (19') du segment de friction contigu.

5. Disque de friction selon la revendication 1, 2 ou 3, caractérisé en ce que les segments de friction (32) sont liés aux segments centraux (26) avec un espacement suffisant entre leurs extrémités pour former un canal d'huile (41).

6. Disque de friction selon la revendication 5, caractérisé en ce que les canaux d'huile (41) sont chanfreinés vers l'extérieur afin d'assurer que les canaux sont remplis d'huile pendant la rotation.

7. Disque de friction selon la revendication 1, 2, 3, 5 ou 6, caractérisé en ce que chaque segment de friction (32) comporte des paires de fentes décalées circonférentiellement (35, 38) débouchant alternativement dans les périphéries intérieure et extérieure (36, 37) du segment pour former des canaux d'huile.

8. Disque de friction selon la revendication 7, caractérisé en ce que chaque segment central (26) comporte une ouverture allongée (31) formée pour chevaucher partiellement chaque paire de fentes décalées (35, 38) afin de permettre la communication entre elles.

9. Disque de friction selon la revendication 8, caractérisé en ce que l'ouverture allongée (31) dans un segment central (26) chevauche une paire de fentes décalées (35, 38) dans des segments de friction (32) sur les surfaces opposées du segment central.

10. Disque de friction selon l'une quelconque des revendications 7 à 9, caractérisé en ce que les fentes (38) ménagées dans les segments de friction (32) débouchant dans la périphérie extérieure ont des cols rétrécis (39) pour empêcher l'écoulement de l'huile à travers elles.

11. Procédé de formation d'un disque de friction selon l'une quelconque des revendications précédentes, dans lequel une multitude de segments en forme d'arc (18) en matériau pour garniture de friction sont formés et liés aux faces opposées de la plaque centrale annulaire (11), les segments de friction étant disposés bout à bout de manière à former une garniture de friction sensiblement annulaire sur chaque face de la plaque centrale; caractérisé en ce que la plaque centrale elle-même est constituée d'une multitude de segments en forme d'arc (13) avec des trous en alignement (16, 21) ménagés dans chacun des segments de la plaque centrale et des segments de friction, une multitude de segments de friction sont assemblés sur des axes d'alignement (17) d'un dispositif (23) qui pénètrent les trous d'alignement des segments pour positionner les segments de friction bout à bout et former un anneau pratiquement complet, une multitude de segments centraux sont assemblés sur les axes d'alignement en contact avec les segments de friction pour former un anneau complet avec les extrémités adjacentes de segments centraux successifs verrouillés ensemble; une seconde multitude de segments de friction est assemblée sur les axes en contact avec la face opposée des segments centraux; et les segments de friction sont liés par apport de chaleur et de pression aux segments centraux alors que tous les segments sont maintenus en position relative par les axes.

0 115 211

Fig.1.
Fig.2.
Fig.3.
Fig.4.
Fig.5.

1

Fig.6.

Fig.7.

Fig.8.

Fig.9.